Europäisches Patentamt

European Patent Office

Office européen des brevets

(11) Publication number: **0 100 550**
**B1**

# EUROPEAN PATENT SPECIFICATION

(45) Date of publication of patent specification: 28.01.87

(51) Int. Cl.⁴: **C 08 F 6/28, C 08 F 10/06**

(21) Application number: 83107588.2

(22) Date of filing: 02.08.83

(54) Method for the purification of propylene polymers.

(30) Priority: 03.08.82 JP 134712/82

(43) Date of publication of application:
15.02.84 Bulletin 84/07

(45) Publication of the grant of the patent:
28.01.87 Bulletin 87/05

(84) Designated Contracting States:
DE GB IT NL

(56) References cited:
FR-A-2 257 607
US-A-3 197 453
US-A-4 214 063

(73) Proprietor: MITSUI TOATSU CHEMICALS,
INCORPORATED
2-5 Kasumigaseki 3-chome
Chiyoda-Ku Tokyo 100 (JP)

(72) Inventor: Ooka, Tatuo
2-47-21, Koumyoudai
Izumi Osaka-fu (JP)
Inventor: Uchikawa, Nobutaka
6-3-2, Higashi-hagoromo
Takaishi Osaka-fu (JP)
Inventor: Funakoshi, Yoshiyuki
3-9-125, Nishi-toriishi
Takaishi Osaka-fu (JP)
Inventor: Toyota, Eiichi
2-2-1, Ayazono
Takaishi Osaka-fu (JP)
Inventor: Imura, Nobuyoshi
6-3-2, Higashi-hagoromo
Takaishi Osaka-fu (JP)

(74) Representative: Schüler, Horst, Dr. European
Patent Attorney
Kaiserstrasse 41
D-6000 Frankfurt/Main 1 (DE)

## Description

### Technical Field

This invention relates to a method for the purification of propylene polymers containing volatile components whose boiling points are relatively high. More particularly, it relates to such a method in which the volatile components remaining in a polymer obtained by the polymerization of propylene alone or of propylene with other α-olefins by means of a catalyst containing a transition metal compound as one component according to either the bulk polymerization technique using the propylene itself as the reaction medium or the vapor phase polymerization technique (which polymer will hereinbefore be referred to briefly as a propylene polymer) are substantially removed to obtain a polymer of high quality.

### Background Art

During the bulk polymerization or vapor phase polymerization of propylene alone or of propylene with other α-olefin, high-boiling organic esters, sulfur-containing compounds, iodine-containing compounds and/or nitrogen-containing compounds are added to the polymerization system as additional components of the catalyst, and high-boiling alcohols and/or glycol ethers are added to decompose the catalyst. Even if very small amounts of these substances remain in the propylene polymer powder, they tend to give off an odor. Where this polymer is to be used in the field of food packaging, such an odor may pose a serious problem. Since these odorous substances usually have boiling points higher than the softening point of the propylene polymer, drying under atmospheric pressure by means of a through-flow rotary dryer using a small amount of drying gas requires an unduly long drying time and hence fails to achieve drying. On the other hand, vacuum drying is disadvantageous in that it requires complicated equipment for the realization of a continuous process.

In US Patent 4,214,063, US Patent 3,197,453 and French Patent publication No. 8070/1974, it is proposed to remove catalyst residues which remain and contaminate propylene polymer by washing them with liquid propylene. However, with the methods disclosed in these references, there can not be removed all the contaminants which give off an odor, since only the contaminants soluble in liquid propylene can be removed.

In the case of the common fluidized drying method using a large amount of nitrogen gas, the nitrogen gas leaving the drying step must be cooled to a temperature of the order of −15°C to condensate and remove the volatile components entrained therein and, subsequently, it must be heated again to the drying temperature in the vicinity of 100°C. Thus, this method has the disadvantage of involving great energy costs of cooling and heating as well as requiring complicated and expensive equipment therefor.

In Japanese Patent Laid-Open No. 24407/'81, it is proposed to remove organic esters having boiling points of 150°C or above from an olefin polymer powder by bringing it into contact with steam at a temperature lower than the melting point of the polymer. However, this method brings about severe corrosion of the equipment owing to the hydrogen chloride formed by the contact of the chlorine remaining in the olefin with steam. Moreover, the use of steam involves the problems of disposal of the condensate and an increase in production costs. Therefore, this method cannot be regarded as economical from an industrial point of view.

As compared with solution polymerization using a hydrocarbon solvent, bulk polymerization and vapor phase polymerization is advantageous in that the resulting polymer can readily be dried. The present inventors have made steady efforts to overcome the difficulties of the prior art methods concerning the removal of volatile components from the resulting polymer without impairing the advantage of the aforesaid polymerization techniques, and have found that such volatile components can be efficiently removed according to the method described below in detail.

### Disclosure of the Invention

It is an object of the present invention to provide a novel method for the drying and purification of a propylene polymer containing volatile components with great economic advantages.

According to the present invention, there is provided a method for the purification of solid propylene polymers obtained from bulk polymerization or vapour phase polymerization processes which comprises bringing a propylene polymer containing volatile components into contact with a gas consisting mainly of propylene at a temperature lower than the melting point of the polymer, whereby the volatile components are removed from the propylene polymer.

### Brief Description of the Drawing

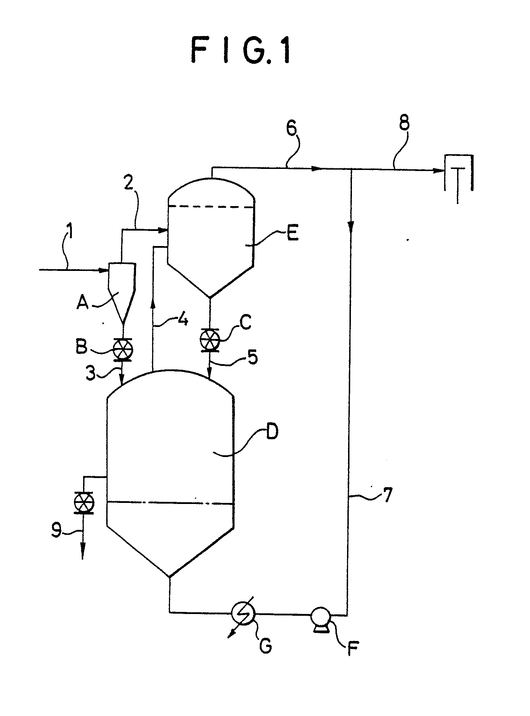

Fig. 1 is a schematic view of an exemplary apparatus for carrying out the present method for the purification of propylene polymers.

### Best Mode for Carrying Out the Invention

As a result of investigation by the present inventors, it has been revealed that a process gas obtained by evaporating the reaction medium contained in a slurry resulting from bulk polymerization using propylene itself as the reaction medium or a process gas separated and recovered from a polymerization mixture resulting from vapor phase polymerization has a sufficient low dew point for use as a drying gas. Thus, by bringing a propylene polymer containing volatile components into contact with such a process gas at a temperature lower than melting point of the polymer, the polymer can be dried to substantially the same extent as is attainable by the conventional fluidized drying method using a large amount of nitrogen gas and, moreover, the high-boiling odorous substances can be removed satisfactorily. According to the method of the present invention, most of the great amount of energy consumed for cooling and heating of the drying gas in the conventional fluidized drying method using nitrogen gas can be saved. More specifically, the process gas leaving the drying step and having volatile components entrained therein need not be cooled or heated to remove the volatile components, but may be directly compressed and sent to a recovery step in which the volatile components are separated from the process gas by means of a distilling column. Therefore, the polymer drying step can be made very simple, which leads to a reduction in equipment and energy costs. Thus, the method of the present invention can effect great economy.

In order to facilitate the understanding of the present invention, one preferred embodiment thereof is specifically described below with reference to Fig. 1.

In the practice of the present invention, a mixture of propylene polymer powder and a process gas is obtained by a flash evaporation of a slurry resulting from the polymerization of propylene alone or of propylene with other α-olefins according to the bulk polymerization technique using the propylene itself as the reaction medium, or as a polymerization mixture of propylene alone or of propylene with other α-olefins. By pneumatic conveying, this mixture of a polymer powder and a gas is introduced through a line 1 into a cyclone A, where the gas is separated from the polymer powder. The gas substantially free of solid matter is conducted through a line 2 into a bag filter E, where any residual solid matter is removed from the gas. A part of the gas withdrawn through a line 6 is sent to a recovery step by way of a line 8, while another part is used as a drying gas. This gas is recycled to a dryer D by way of a line 7.

The drying gas is driven by a blower F and a heater G is provided to supply the shortage of heat. The powder is fed to dryer D through rotary valves B and C. The gas leaving dryer D is conducted into bag filter E through a line 4, while the dried powder is withdrawn from dryer D through a line 9.

Dryers (such as rotary dryers and paddle dryers) which generally use a small amount of gas are not suitable for the purpose of the present invention. Fluidized-bed dryers and silo type dryers are useful in the practice of the present invention, though fluidized-bed dryers are most preferred. The dew point of the process gas consisting mainly of propylene is closely related to the ultimate equilibrium volatile content of the dried powder. The lower the dew point becomes, the more volatile content of the dried powder is reduced. Accordingly, the dew point should preferably be adjusted to 30°C or below and more preferably −10°C or below.

Other conditions (such as the drying time, the amount of the drying gas, the temperature of the drying gas, may be equivalent to those employed in conventional drying with nitrogen gas.

The method of the present invention permits propylene polymers to be dried and purified very efficiently. Moreover, any odorous substances can be economically removed to such an extent as to pose essentially no problems. Thus, the method of the present invention is of great value from an industrial point of view.

The effects of the present invention are more specifically illustrated by the following reference examples, examples and comparative example.

Reference Example 1
[Preparation of a propylene polymer and a gas consisting mainly of propylene]

There was provided a vibration mill fitted with a grinding pot having an internal volume of 700 liters and containing 2,300 kg of steel ball 12 mm in diameter. The pot was charged with 60 kg of magnesium chloride, 12 liters of tetraethoxysilane and 9 liters of 1,2-dichloroethane in an atmosphere of nitrogen and they were milled for 40 hours. A stirred tank of 600-liter capacity was dried well, purged with nitrogen and charged with 36 kg of the above milled product and 240 liters of titanium tetrachloride. After stirring at 80°C for 120 minutes, the mixture was allowed to settle and the resulting supernatant was removed. After the addition of 420 liters of n-heptane and stirring at 80°C for 15 minutes, the mixture was allowed to settle and the resulting supernatant was removed. This washing procedure was repeated seven times. Subsequently, 240 liters of n-heptane was added to form a solid catalyst slurry. When a sample of this solid catalyst slurry was taken and analysed after evaporation of the n-heptane, the solid catalyst was found to contain 2.05% by weight of titanium.

A jacketed polymerizer of 20-m$^3$ capacity was dried well, purged with nitrogen and then propylene, and charged with 4,000 kg of propylene. On the other hand, a small-sized autoclave of 30-liter capacity was charged with 22 liters of n-heptane, 1,056 ml of diethylaluminum chloride, 616 ml of methyl p-toluylate and 220 g of the above solid catalyst. After stirring at room temperature for 1 minute, 220 ml of triethylaluminum was added thereto. Then, the contents of the autoclave was introduced under pressure into the aforesaid polymerizer. After 9.00 Nm$^3$ of hydrogen was introduced, hot water was circulated through the jacket to raise the internal temperature to 75°C. Then, the polymerization reaction was carried out for 2 hours with the internal temperature maintained at 75°C and the hydrogen concentration kept constant. During this period, 660 ml of triethylaluminum dissolved in 12,540 ml of n-heptane was continuously introduced under pressure into the polymerizer at a rate of 110 ml/min and liquid propylene was fed at a rate of 27.5 Kg/min. Thereafter, the polymerization reaction was stopped by the addition of 16.5 kg of diethylene glycol monoisopropyl ether. Then, the contents were stirred at 70°C to obtain a slurry comprising 3,300 kg of polypropylene and 4,000 kg of propylene. This slurry was washed with purified propylene substantially free of high-boiling substances. The washed polypropylene slurry was introduced into a double pipe heater, where the propylene was evaporated to obtain a propylene polymer powder and a gas consisting mainly of propylene. This evaporation step was controlled so that the resulting gas had a temperature of 107°C. The gas consisting mainly of the evaporated propylene comprised 99.6% by weight of propylene and 0.4% by weight of n-heptane, and its dew point was −25°C at the pressure, 0.4 kg/G, of the dryer. On the other hand, when a sample of the resulting powder was taken and analysed, it was found to have a residual volatile content of 2,400 ppm by weight and a residual methyl p-toluylate content of 8 ppm by weight. This powder gave off a strong odor of methyl p-toluylate. The above-described propylene polymer powder and gas consisting mainly of propylene were used in the following Example 1.

## Example 1

Using the apparatus illustrated in Fig. 1, the mixture obtained in the preceding Reference Example 1 and composed of a propylene polymer powder and a gas consisting mainly of propylene was introduced into cyclone A through line 1. The propylene polymer powder was conducted through rotary valve B into fluidized-bed dryer D. On the other hand, the gaseous constituent was conducted through line 2 into bag filter E, where any residual solid matter was removed. A part of the gas withdrawn through line 6 was sent to a recovery system by way of line 8, while another part was used as a drying gas. In line 7, this gas was heated to 110°C by means of gas heater G and then recycled to the dryer. The internal temperature of the dryer was 106°C and the internal pressure thereof was 0.4 kg/G. The gas was recycled at a rate of 1,000 Nm³/h per 1,000 kg of the powder to be dried. The dryer was controlled so that the average residence time of the powder was 30 minutes, and operated for 2 hours. By analysis, the dried powder (or purified product) withdrawn through line 9 was found to have a residual volatile content of 130 ppm by weight and a residual methyl p-toluylate content of 1 ppm by weight, and its odor was virtually undetectable.

## Reference Example 2
[Preparation of propylene polymer and a gas consisting mainly of propylene]

The solid catalyst prepared in Reference Example 1 was suspended in n-heptane to form a slurry having a concentration of 20%(w/w). This slurry was fed to a fluidized-bed polymerizer of 8 m³ capacity at a rate of 83 g/h as the solid catalyst. At the same time, a 20%(w/w) solution of diethylaluminum chloride in n-heptane was fed at a rate of 290 g/h as diethylaluminum chloride, a 20%(w/w) solution of triethylaluminum in n-heptane at a rate of 290 g/h as triethylaluminum, a 20%(w/w) solution of methyl p-toluylate in n-heptane at a rate of 250 g/h as methyl p-toluylate, propylene at a rate of 1,880 kg/h, and hydrogen gas at a rate of 0.4 kg/h.

The heat of polymerization was removed by evaporating the propylene fed in the liquid state and the recycled liquid propylene. The polymerization conditions were controlled so as to provide a polymerization temperature of 75°C and a pressure of 28 kg/G. Withdrawn from the polymerizer were a propylene polymer powder at a rate of 830 hg/h and gaseous propylene at a rate of 1,050 kg/h. Their mixture was used in Example 2.

## Example 2

Using the apparatus illustrated in Fig. 1, the mixture obtained in the preceding Reference Example 2 and composed of a propylene polymer powder and a gas consisting mainly of propylene was introduced into cyclone A by way of line 1.

Then, a drying test was carried out for 4 hours under the same conditions as employed in Example 1. Prior to introduction into the fluidized-bed dryer, the propylene polymer powder had a residual volatile content of 1,500 ppm by weight and a residual methyl p-toluylate content of 20 ppm by weight. This powder gave off a strong odor of methyl p-toluylate.

When the dried mixture was analyzed, it was found to have a residual volatile content of 180 ppm by weight and a residual methyl p-toluylate content of 0.5 ppm by weight. The odor of the powder was virtually undetectable. In this example, the gas introduced through line 1 comprised 99.7% by weight of propylene and 0.3% by weight of n-heptane, and its dew point was −30°C at a pressure of 0.4 kg/G.

## Comparative Example
[Drying with nitrogen gas]

In the apparatus illustrated in Fig. 1, 11kg of the undried propylene polymer powder used in Example 1 was removed from the system through the rotary valve located at the bottom of cyclone A. By analysis, this powder was found to have a residual volatile content of 2,200 ppm by weight and a residual methyl p-toluylate content of 8 ppm by weight. This powder gave off a strong odor of methyl p-toluylate. A fluidized-bed dryer having a diameter of 25 cm was charged with 10 kg of the powder. Nitrogen gas whose dew point had been adjusted to −25°C by the addition of n-heptane was heated to 110°C and continuously supplied to the fluidized-bed dryer at a rate of 1 Nm³/h per kilogram of the powder to be dried. After 30 minutes, the supply of the drying gas was stopped. At this time, the internal temperature of the fluidized-bed dryer was 106°C and the pressure thereof was 0.4 kg/G. Immediately after the drying, the powder was withdrawn from the system and analyzed. Thus, the powder was found to have a residual volatile content of 160 ppm by weight and a residual methyl ptoluylate content of 1.5 ppm by weight. The odor of the powder was virtually undetectable.

As described above, the batch-wise drying with nitrogen gas produced substantially the same results as obtained in Example 1 by the continuous drying with a gas consisting mainly of propylene. This clearly indicates that a gas consisting mainly of propylene can bring about the same degree of purification as is achievable with nitrogen gas.

## Claims

1. A method for the purification of solid propylene polymer products obtained from bulk polymerization or vapor phase polymerization processes which comprises bringing a propylene polymer containing volatile components into contact with a gas consisting mainly of propylene at a temperature lower than the melting point of the polymer, whereby the volatile components are removed from the propylene polymer.

2. A method as claimed in claim 1 wherein the gas consisting mainly of propylene has a dew point of 30°C or below.

3. A method as claimed in claim 1 wherein the gas consisting mainly of propylene is either a process gas obtained by evaporating the reaction medium contained in a slurry resulting from bulk polymerization or a process gas separated and recovered from a polymerization mixture resulting from vapor phase polymerization.

4. A method as claimed in claim 2 wherein the gas consisting mainly of propylene is either a process gas obtained by evaporating the reaction medium contained in a slurry resulting from bulk polymerization or a process gas separated and recovered from a polymerization mixture resulting from vapor phase polymerization.

## Patentansprüche

1. Verfahren zur Reinigung von festen Propylenpolymerprodukten, die aus Massepolymerisations- oder Dampfphasenpolymerisationsverfahren erhalten worden sind, das das Inkontaktbringen eines flüchtige Bestandteile enthaltenden Propylenpolymeren mit einem Gas, das hauptsächlich aus Propylen besteht, bei einer Temperatur, die niedriger als der Schmelzpunkt des Polymeren ist, umfaßt, wodurch die flüchtigen Bestandteile von dem Propylenpolymeren entfernt werden.

2. Verfahren nach Anspruch 1, bei dem das hauptsächlich aus Propylen bestehende Gas einen Taupunkt von 30°C oder tiefer aufweist.

3. Verfahren nach Anspruch 1, bei dem das hauptsächlich aus Propylen bestehende Gas entweder ein Prozessgas, das durch Verdampfen des in einer aus Massepolymerisation herrührenden Aufschlämmung enthaltenen Reaktionsmediums erhalten worden ist, oder ein Progressgas ist, das von einem aus Dampfphasenpolymerisation herrührenden Polymerisationsgemisch abgetrennt und rückgewonnen worden ist.

4. Verfahren nach Anspruch 2, bei dem das hauptsächlich aus Propylen bestehende Gas entweder ein Prozessgas, das durch Verdampfen des in einer aus Massepolymerisation herrührenden Aufschlämmung enthaltenen Reaktionsmediums erhalten worden ist, oder ein Prozessgas ist, das von einem aus Dampfphasenpolymerisation herrührenden Polymerisationsgemisch abgetrennt und rückgewonnen worden ist.

## Revendications

1. Procédé pour la purification de produits solides de polymère de propylène obtenus per des procédés de polymérisation en masse ou de polymérisation en phase vapeur, consistant à mettre un polymère de propylène qui contient des composants volatils en contact avec un gaz composé principalement de propylène à une température plus basse que le point de fusion du polymère, ce qui fait que les composants volatils sont éliminés du polymère de propylène.

2. Procédé selon la revendication 1, dans lequel le gaz composé principalement de propylène a un point de rosée de 30°C ou audessous.

3. Procédé selon la revendication 1, dans lequel le gaz composé principalement de propylène est soit un gaz produit dans l'usine, obtenu par évaporation du milieu réactionnel contenu dans une bouillie résultant de la polymérisation en masse, soit un gaz produit dans l'usine, séparé et récupéré à partir d'un mélange de polymérisation résultant de la polymérisation en phase vapeur.

4. Procédé selon la revendication 2, dans lequel le gaz composé principalement de propylène est soit un gaz produit dans l'usine, obtenu par évaporation du milieu réactionnel coteny dans une bouillie résultant de la polymérisation en masse, soit un gaz produit dans l'usine, séparé et récupéré à partir d'un mélange de polymérisation résultant de la polymérisation en phase vapeur.

# F I G.1